# EUROPEAN PATENT APPLICATION

(11) **EP 3 025 625 A1**
(43) Date of publication of application: **01.06.2016**
(21) Application number: 14195467.7
(22) Date of filing: 28.11.2014
(51) Int. Cl.: A47J 36/02, B29C 45/14

(54) **Method for producing a pan and a pan for use in a microwave-oven**

(71) Applicant: Nolato Polymer AB, 269 04 Torekov (SE)
(72) Inventor: Wallin, Jimmy, 269 92 Båstad (SE); Lindberg, Thomas, 269 35 Båstad (SE)
(74) Representative: Awapatent AB

(57) **Abstract**

The method for producing pan comprises providing a plate (10) of aluminium, with a first major surface (11) being coated with a non-stick material (13) and which first major surface (11) being adapted to form an upwardly facing food-receiving bottom surface of said pan (1), providing a heating member (20) in contact with a second major surface (12), opposite to said first major surface (11), of said plate (10) of aluminium, said heating member (20) being formed of silicone rubber with ferrite particles, arranging said plate (10) of aluminium in an injection moulding tool, and injection moulding a wall (30) of a plastic material onto said plate (10) of aluminium, the wall (30) extending along the perimeter (P) of said plate (10) of aluminium and having an upwardly (Up) and outwardly (Out) directed extension.

## Description

### Field of invention

The inventions relates to a method of producing a pan for use in a microwave-oven. The invention also relates to a pan for use in a microwave-oven.

### Technical Background

In a microwave-oven food items are heated by bombarding it with electromagnetic microwaves. Polarised molecules, such as water molecules, in the food items will be affected by the microwaves and will build up thermal energy in the food items. However, microwave ovens usually do not heat the food items sufficient to brown or caramelise the food items.

In US 4,450, 334 it has been recognised that this is a problem when heating pizzas since the microwave oven usually does not provide the pizza bottom with the desired crust. The inventors in US 4,450, 334 have therefore designed an utensil called microwave pizza maker for baking pizzas in a microwave oven. The microwave pizza maker comprises a metallic pan and a metallic cover together forming an interior space in which the pizza is to be placed. The edge region of the metallic pan has been shaped as an upwardly extending sidewall. The edge region of the metallic cover has been shaped as a downwardly extending sidewall. The two metallic sidewalls are adapted to overlap each other to provide a choke for the microwaves thereby reducing the amount of microwaves inside the space accommodating the pizza. A layer containing ferrite particles is attached to the undersurface of the pan to absorb microwave energy and produce heat for conduction to the interior space defined by the pan and the cover. The base has legs so that the pan is elevated at least an inch above the floor of the oven. The support surface for the pan consists of a plurality of protrusions or spacers to provide a small surface contact area to minimize heat transfer from the pan to the base. The spacers may be fabricated from a different material than the remainder of the base and connected thereto. This design is however complex and expensive. Moreover, it is difficult to clean after it has been used.

A similarly designed roaster is also disclosed in WO 2006/068402 A1. The roaster comprises a pan formed of aluminium which is formed into a shape with upwardly extending sidewalls ending in an outwardly extending rim. At the bottom of the aluminium pan it is formed a downwardly directed groove extending along and at a distance inside the circumference of the pan. This design of the pan is said to improve bending resistance and to improve the attachment of the pan inside the outer bowl. WO 2006/068402 A1 also discloses the use of a heating plate. Starting from below, an adiabatic plate support, an adiabatic plate, a heating plate, and a pan are sequentially stacked onto the upwardly facing bottom surface of the outer bowl. This design is however complex and expensive. Moreover, it is difficult to clean after it has been used.

A similarly designed browning ware is disclosed in US 4, 542, 271. The browning ware comprises a body having a base and a sidewall, wherein the sidewall is provided with an inwardly directed shelf. The browning ware body is formed of a material transparent to microwave energy. The browning ware further comprises a metallic pan having an upper cooking surface and an edge adapted to be supported by the shelf and maintain a clearance from the sidewall. A heating matrix absorbent to microwave energy is cured to the lower surface of the metallic pan. A binder material is located between the edge of the pan and the shelf capable of withstanding the heat from the metallic pan without melting or degrading. A cavity is formed between the metallic pan and the base which houses the heating matrix therein. This design is however complex and expensive. Moreover, it is difficult to clean after it has been used.

### Summary of invention

In accordance with a first aspect of the invention there is provided a method of producing a pan for use in a microwave oven. The method comprises providing a plate of aluminium, with a first major surface being coated with a non-stick material and which first major surface being adapted to form an upwardly facing food-receiving bottom surface of said pan, providing a heating member in contact with a second major surface, opposite to said first major surface, of said plate of aluminium, said heating member being formed of silicone rubber with ferrite particles, arranging said plate of aluminium in an injection moulding tool, and injection moulding a wall of a plastic material onto said plate of aluminium, the wall extending along the perimeter of said plate of aluminium and having an upwardly and outwardly directed extension.

By producing the pan according to this method, the manufacturing costs may be reduced as compared to the manufacturing costs of the prior art designs. Moreover, the manufacturing process gives the designer a design freedom e.g. when it comes to choosing different shapes and when it comes to balancing the heat transfer of different parts of the pan. The ferrite particles in the heating member will be heated by the microwaves to a temperature which is high enough to brown or caramelise a food product. The heat from the ferrite particles will be conducted via the silicone rubber and through the bottom of the pan to the food product placed on the upwardly facing food-receiving bottom surface. Both silicone rubber and aluminium are suitable materials when it comes to achieving high heat conductivity. This way it is possible to reach temperatures in or at the surface of the food sufficient to brown or caramelise the food. The coating of a non-stick material on the food-receiving bottom surface will reduce the risk of the food item sticking to the bottom surface of the pan. The plastic material of the injection moulded wall may be chosen such that it conducts a limited amount of heat energy. By limited is meant an amount of heat energy that will not cause a browning or caramelising of the food at the interface between the wall and the food. Thereby it is possible to reduce the risk that the food in the pan sticks to the plastic wall. It is also possible to choose the plastic material (the polymer and any filler(s)) such that a pre-determined level of heating of the plastic material will occur in the microwave oven. In one preferred embodiment the plastic material is chosen such that it has a minimum influence on the microwaves and thereby is not or only marginally heated by the microwaves. Another advantage of this design is that it is possible to form a pan without any need to subject the coated aluminium plate to any change in shape, such as subjecting the aluminium plate to a deep-drawing operation or subjecting the perimeter to a folding or roll forming operation. Any need for such an operation will increase the risk of the coating being damaged or even necessitate that the coating is applied after the shaping process, which would increase the manufacturing costs.

Preferred embodiments of the invention appear in the dependent claims.

The non-stick material may be chosen from the group consisting of PTFE, silicone and ceramic. These materials are suitable to provide as a coating on the aluminium plate. Moreover, they may be applied in cost effective large scale production plants. Moreover, coatings of these materials may be applied before or after large aluminium sheets are cut into the aluminium plates to be used as the bottom surface of the pan.

The ferrite particles may be provided in between 50-80% (by weight) in the heating member. This amount of ferrite particles is established as a balance between providing sufficient heating capacity and providing sufficient ability to be moulded in the injection moulding process. The amount depends on type of ferrite particles and the type of microwave system in which the pan is intended to be used.

The injection moulding of the wall of plastic material may, at the interface between the wall and the plate of aluminium, provide the wall with an upper lip, which extends along the perimeter of the plate of aluminium on the first major surface of the plate of aluminium and thereby forms an interface with the coating of non-stick material. Such an upper lip will thereby hide and thereby protect the edge of the coating. Thereby the risk of the coating being peeled away from the aluminium plate is reduced.

The injection moulding of the wall of plastic material may, at the interface between the wall and the plate, provide the wall with a lower lip, which extends along the perimeter of the plate of aluminium on the second major surface. The provision of the lower lip will hide the edge of the aluminium plate such that it is not accessible from the outside of the pan. Thereby the user does not risk cutting him-/herself on the edge of the aluminium plate. From a perspective related to the manufacturing cost, it is advantageous that the edge is hidden in the injection moulding step, since it thereby is no need to introduce an additional processing step in which the edge of the aluminium plate is smoothened or covered. In one embodiment the heating member extends all the way out to the edge of the plate of aluminium and the lower lip thus forms an interface only with the heating member. In one embodiment the heating member does not extend all the way out to the edge of the plate of aluminium and the lower lip forms an interface both with the plate of aluminium and with the heating member. In one embodiment the heating member does not extend all the way out to the edge of the plate of aluminium and the lower lip forms an interface with the plate of aluminium but does not form an interface with the heating member.

In a preferred embodiment, the injection moulding of the wall comprises the formation of both an upper lip and a lower lip. The upper lip is formed at the interface between the wall and the plate of aluminium and extends along the perimeter of the plate of aluminium on the first major surface of the plate of aluminium and thereby forms an interface with the coating of non-stick material above. The lower lip is formed at the interface between the wall and the plate of aluminium and extends along the perimeter of the plate of aluminium on the second major surface. Thereby the advantages of the respective lip are achieved and furthermore the wall is securely fastened to the aluminium plate since it physically grabs the edge of the aluminium plate from both major surfaces.

The step of providing the heating member may comprise injection moulding a silicone rubber with ferrite particles onto said second major surface of the plate of aluminium. This is a cost-effective manner of both forming the heating member and attaching the heating member to the under surface of the aluminium plate in a single step. In another embodiment, the heating member may be applied to the plate by adhesive bonding, whereby a pre-formed heating member is glued to the plate. As a yet another possibility the heating member may be applied to the plate by injection compression.

The lower lip may form an interface with the second major surface of the plate of aluminium. This way the lower lip is attached directly to the aluminium, whereby the joint thus formed will become well-defined and strong.

In accordance with a second aspect of the invention there is provided a pan for use in a microwave oven. The pan comprises a plate of aluminium, with a first major surface being coated with a non-stick material and which first major surface being adapted to form an upwardly facing food-receiving bottom surface of said pan, a heating member in contact with a second major surface, opposite to said first major surface, of said plate of aluminium, said heating member being formed of silicone rubber with ferrite particles, and a wall extending along the perimeter of said plate of aluminium and having an upwardly and outwardly directed extension, wherein said wall is of a plastic material and has been injection moulded onto the plate of aluminium.

By a pan of this kind, the manufacturing costs may be reduced as compared to the manufacturing costs of the prior art designs. Moreover, the manufacturing process gives the designer a freedom e.g. when it comes to choosing different shapes and when it comes to balancing the heat transfer of different parts of the pan. The ferrite particles in the heating member will be heated by the microwaves to a temperature which is high enough to brown or caramelise a food product. The heat from the ferrite particles will be conducted via the silicone rubber and through the bottom of the pan to the food product placed on the upwardly facing food-receiving bottom surface. Both silicone rubber and aluminium are suitable material when it comes to achieving high heat conductivity. This way it is possible to reach temperatures in or at the surface of the food sufficient to brown or caramelise the food. The coating of a non-stick material on the food-receiving bottom surface will reduce the risk of the food item sticking to the bottom surface of the pan. The plastic material of the injection moulded wall may be chosen such that it conducts a limited amount of heat energy, whereby it will not cause a browning or caramelising of the food at the interface between the wall and the food. Thereby it is possible to reduce the risk that the food in the pan sticks to the plastic wall. It is also possible to choose the plastic material (the polymer and any filler(s)) such that a pre-determined level of heating of the plastic material will occur in the microwave oven. In one preferred embodiment the plastic material is chosen such that it has a minimum influence on the microwaves and thereby is not or only marginally heated by the microwaves. Another advantage of this design is that it is possible to form a pan without any need to subject the coated aluminium plate to any change in shape, such as subjecting the aluminium plate to a deep-drawing operation or subjecting the perimeter to a folding or roll forming operation. Any need for such an operation will increase the risk of the coating being damaged or even necessitate that the coating is applied after the shaping process, which would increase the manufacturing costs.

Preferred embodiments of the invention appear in the dependent claims. The advantages associated with the respective features of respective dependent claims appear in the description above relating to the corresponding features in respect of the method claims. Moreover, the alternatives mentioned in respect of the method are also applicable in respect of the pan as such.

### Brief description of the drawings

The invention will by way of example be described in more detail with reference to the appended schematic drawings, which shows a presently preferred embodiment of the invention.
Fig 1 is a perspective view from above of a pan in accordance with the invention.
Fig 2 is a cross-section of the pan of fig 1.
Fig 3 is a bottom view of the pan of fig 1.
Fig 4 is a diagram disclosing a manufacturing process in accordance with the invention.

### Detailed description of preferred embodiments

The pan 1 is adapted for use in a microwave-oven, and is especially adapted to be able to provide heat sufficient to brown or caramelise food placed in the pan when the pan and food is heated in a microwave-oven.

The pan 1 comprises a plate 10 of aluminium. The aluminium plate 10 has a thickness of between 0.8-1.5 mm and preferably the plate 10 has a thickness of about 1 mm. The plate 10 has a first major surface 11 and, opposite to this, a second major surface 12. The first major surface 11 is coated with a thin coating 13 of a non-stick material. The first major surface 11 with its coating 13 is adapted to form an upwardly facing food-receiving bottom surface of said pan 1. The non-stick material is chosen from the group consisting of PTFE (Polytetrafluoroethylene), silicone and ceramic. The non-stick material preferably has a thickness of 5-30 µm and more preferred a thickness of 10-25 µm. . In the disclosed design, the plate 10 extends in a single plane. It is to be understood that other extensions are possible. Also, the plate 10 may have a textured surface.

The pan further comprises a heating member 20. The heating member 20 is in direct contact with the second major surface 12 of the aluminium plate 10. The heating member 20 is provided by injection moulding of a silicone rubber with ferrite particles onto said second major surface 12 of the plate 10. The heating member comprises between 50-80% (by weight) of ferrite particles. The exact choice of amount of ferrite particles is dependent upon the desired heating effect and the desired ability to be moulded in the injection moulding step. Further, the amount depends on the type of ferrite particles and also in which type of microwave system the pan is intended to be used.

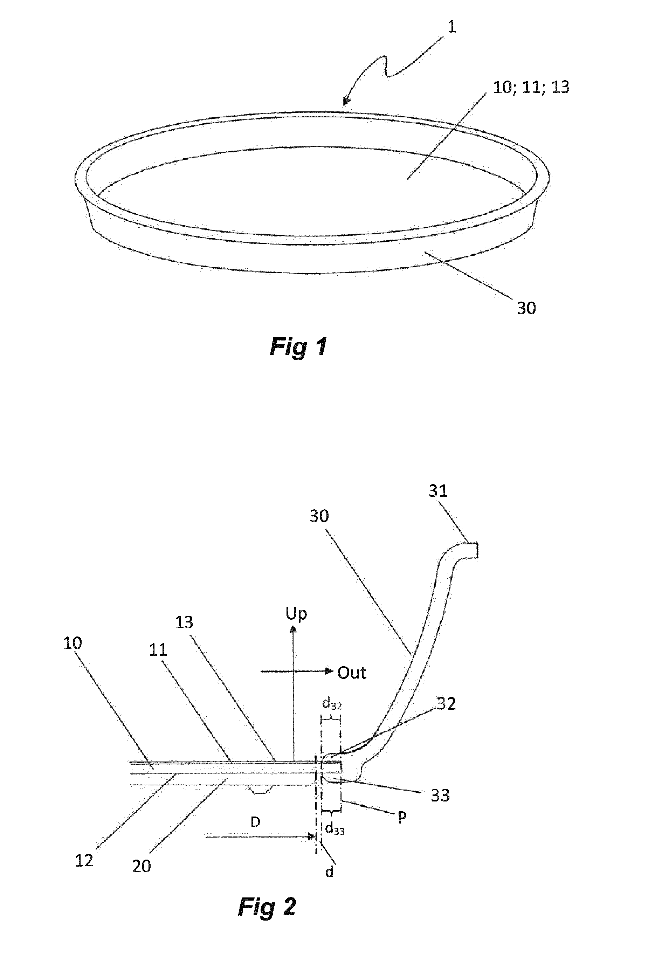

The pan 1 further comprises a wall 30 extending along the perimeter P of said plate 10. The wall 30 has an upwardly and outwardly directed extension from the interface between the wall 30 and the perimeter P of the plate 10. The upward direction is denoted by the arrow Up in fig 2. The outward direction is denoted by the arrow Out in fig 2. The wall 30 is of a plastic material and has been injection moulded onto the plate. At its upper edge the wall 30 has a horizontally extending rim 31. This rim 31 improves the resistance of the wall against being pushed or deformed inwardly. The wall 30 is formed of a plastic material chosen from the group consisting of LCP (Liquid crystal polymer) and PPS (polyphenylene sulfide). The wall 30 has a thickness of between 1-3 mm. The thickness depends on design of the pan and desired stability.

The wall 30 comprises an upper lip 32 at the interface between the wall 30 and the aluminium plate 10. The upper lip 32 extends along the perimeter P of the plate 10. The upper lip 32 extends inwardly a short distance d₃₂ on the first major surface 11 of the plate and thereby forms an interface with the coating 13 of non-stick material. The upper lip 32 is continuous around the perimeter P of the plate 10 and thus completely covers the edge of the coating 13 of non-stick material.

The wall 30 comprises a lower lip 33 at the interface between the wall 30 and the aluminium plate 10. The lower lip 33 extends along the perimeter P of the plate 10. The lower lip 33 extends inwardly a short distance d₃₃ on the second major surface 12 of the plate 10.

The heating member 20 has an outer dimension D being smaller than the outer dimension P of the plate 10 such that there is an annular portion of the second major surface 12 extending around and outside of the interface between the heating member 20 and the second major surface 12 of the plate. The lower lip 33 forms an interface with the second major surface 12 of the aluminium plate. The outer dimension D of the heating member 20, the outer dimension P of the plate 10 and the radial inward extension of the lower lip 33 are chosen such that there is a gap or distance d between the radially inner most portion of the lower lip 33 and the radially outermost portion of the heating member 20.

At the bottom surface 21, the heating member 20 is provided with a plurality of small protrusions 22 extending downwardly. The protrusions 22 forms feet upon which the pan 1 rests e.g. when placed in the microwave- oven or placed on a table-top in the kitchen.

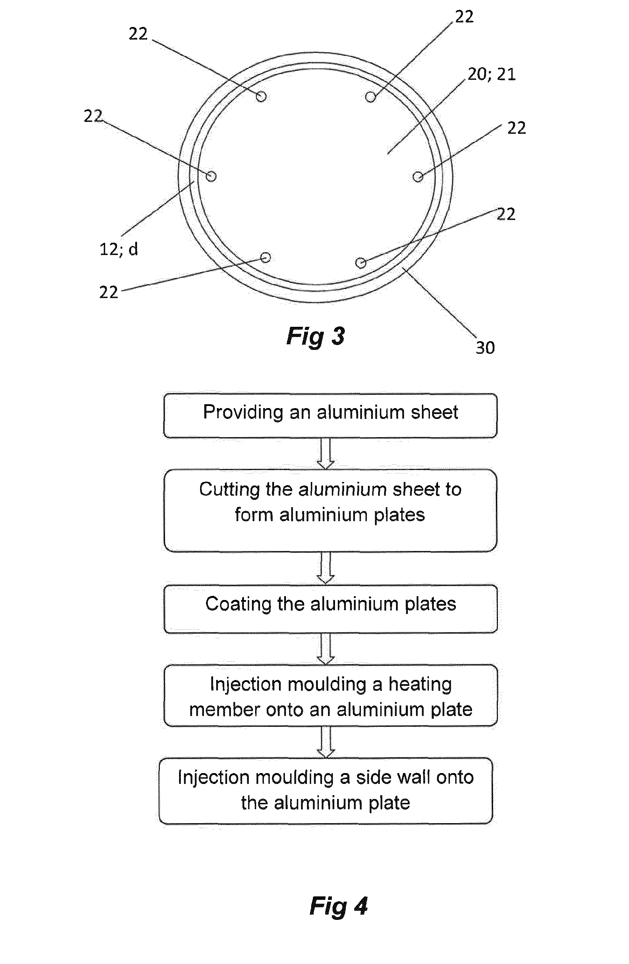

The pan 1 is produced in accordance with the method disclosed the diagram of fig 4. In a first step an aluminium sheet is provided. The aluminium sheet is cut, punched or otherwise divided into separate plates each adapted to form a bottom-part of a pan. The cut plates are coated with the non-stick material on the first major surface. The plate is arranged in a mould in which the heating member 20 is injection moulded onto the aluminium plate on the major surface being opposite to the coated major surface. The plate with the heating member attached is then removed from the mould and is then arranged in a second mould in which the wall 30 is injection moulded onto the perimeter of the aluminium plate 10.

It is contemplated that there are numerous modifications of the embodiments described herein, which are still within the scope of the invention as defined by the appended claims.

It is e.g. contemplated that the injection moulding of the heating member and the injection moulding of the wall is performed in the opposite order.

It is also contemplated that the injection moulding of the heating member and the injection moulding of the wall is performed in one and the same mould.

It is also contemplated that the injection moulding of the heating member and the injection moulding of the wall is performed simultaneously.

The heating member may be applied to the plate by adhesive bonding, whereby a pre-formed heating member is glued to the plate. As a yet another possibility the heating member may be applied to the plate by injection compression or compression moulding.

The coating with non-stick material may be made before cutting, however in that case also the waste material will be coated whereby the possibilities of re-using or re-cycling the waste aluminium is negatively affected.

## Claims

1. Method for producing pan (1) to be used in a microwave-oven, the method comprising
providing a plate (10) of aluminium, with a first major surface (11) being coated with a non-stick material (13) and which first major surface (11) being adapted to form an upwardly facing food-receiving bottom surface of said pan (1),
providing a heating member (20) in contact with a second major surface (12), opposite to said first major surface (11), of said plate (10) of aluminium, said heating member (20) being formed of silicone rubber with ferrite particles,
arranging said plate (10) of aluminium in an injection moulding tool, and
injection moulding a wall (30) of a plastic material onto said plate (10) of aluminium, the wall (30) extending along the perimeter (P) of said plate (10) of aluminium and having an upwardly (Up) and outwardly (Out) directed extension.

2. Method according to claim 1, wherein the non-stick material (13) is chosen from the group consisting of PTFE, silicone and ceramic,

3. Method according to claim 1 or 2, wherein between 50-80% (by weight) of ferrite particles is provided in the heating member (20).

4. Method according to anyone of claims 1-3, wherein the injection moulding of the wall (3) of plastic material provides, at the interface between the wall (30) and the plate (10) of aluminium, the wall (30) with an upper lip (32), which extends along the perimeter (P) of the plate (10) of aluminium on the first major surface (11) of the plate (10) of aluminium and thereby forms an interface with the coating (13) of non-stick material.

5. Method according to anyone of claims 1-4, wherein the injection moulding of the wall (3) of plastic material provides, at the interface between the wall (30) and the plate (10) of aluminium, the wall (30) with a lower lip (33), which extends along the perimeter (P) of the plate (10) of aluminium on the second major surface (12).

6. Method according to anyone of claims 1-5, wherein providing the heating member (20) comprises injection moulding a silicone rubber with ferrite particles onto said second major surface (12) of the plate (10) of aluminium.

7. Method according to claim 5 or 6, wherein the lower lip (33) forms an interface with the second major surface (12) of the plate (10) of aluminium.

8. A pan (1) for use in a microwave-oven, the pan (1) comprising
a plate (10) of aluminium, with a first major surface (11) being coated with a non-stick material (13) and which first major surface (11) being adapted to form an upwardly facing food-receiving bottom surface of said pan (1),
a heating member (20) in contact with a second major surface (12), opposite to said first major surface (11), of said plate (10) of aluminium, said heating member (20) being formed of silicone rubber with ferrite particles, and
a wall (30) extending along the perimeter (P) of said plate (10) of aluminium and having an upwardly (Up) and outwardly (Out) directed extension, wherein said wall (30) is of a plastic material and has been injection moulded onto the plate (10) of aluminium.

9. A pan (1) according to claim 8, wherein the non-stick material (13) is chosen from the group consisting of PTFE, silicone and ceramic,

10. A pan (1) according to claim 8 or 9, wherein the heating member (20) comprises between 50-80% (by weight) of ferrite particles.

11. A pan (1) according to anyone of claims 8-10, wherein the injection moulded wall (30) of plastic material comprises, at the interface between the wall (30) and the plate (10) of aluminium, an upper lip (32), which extends along the perimeter (P) of the plate (10) of aluminium on the first major surface (11) of the plate (10) of aluminium and thereby forms an interface with the coating (13) of non-stick material.

12. A pan (1) according to anyone of claims 8-11, wherein the injection moulded wall (30) of plastic material comprises, at the interface between the wall (30) and the plate (10) of aluminium, a lower lip (33), which extends along the perimeter (P) of the plate (10) of aluminium on the second major surface (12).

13. A pan (1) according to anyone of claims 8-12, wherein the heating member (20) is provided by injection moulding of a silicone rubber with ferrite particles onto said second major surface (12) of the plate (10) of aluminium.

14. A pan (1) according to claim 12 or 13, wherein the lower lip (33) forms an interface with the second major surface (12) of the plate (10) of aluminium.
